# EUROPEAN PATENT APPLICATION

(11) **EP 4 588 900 A1**
(43) Date of publication of application: **23.07.2025**
(21) Application number: 24152574.0
(22) Date of filing: 18.01.2024
(51) Int. Cl.: C02F 3/32, C01B 32/05, C10B 53/02, C02F 1/40, C02F 101/32, C02F 103/36, C02F 1/24

(54) **METHOD AND PRODUCTION PLANT FOR COMBINED PRODUCTION OF OIL AND AN INERT MATERIAL ACTING AS A CARBON SINK**

(71) Applicant: Bauer Resources GmbH, 86529 Schrobenhausen (DE)
(72) Inventor: Dario Polverini, Kezad, Abu Dhabi (AE); Dennis Kronborg Alexandersen, Seef District (BH)
(74) Representative: Wunderlich & Heim Patentanwälte PartG mbB

(57) **Abstract**

The invention relates to a method and a production plant of combined production of oil and an inert material acting as a carbon sink, preferably biochar, from a feedstock of waste oily produced water, preferably from the oil, gas or geothermal industry, preferably to achieve a minimum carbon footprint of the oil recovered in this process and to produce, from the recovered oil, a low carbon intensity fuel, in particular low carbon intensity aviation fuel or fuel for maritime applications. The method comprises the following steps:
- a) physical separation and recovery of a first fraction of oil from the waste oily produced water;
- b) optionally polishing the waste oily produced water effluent of step a) by a biological treatment in a constructed wetland system, mangrove wetland or periphyton bioreactor;
- c) cultivating biomass using the treated water effluent of step a) and/or b) to capture CO₂ from the atmosphere; and
- d) harvesting the cultivated biomass of step c) and, optionally, biomass produced in step b) and converting it into the inert material acting as a carbon sink, preferably the biochar.

## Description

The invention relates to a method and a production plant for combined production of oil and an inert material acting as a carbon sink, preferably biochar, from waste oily produced water, preferably originating from the oil, gas or geothermal industry, according to claim 1, preferably to produce, from the oil, low carbon intensity fuel, in particular low carbon intensity aviation fuel or fuel for maritime applications.

Moreover, the invention relates to a production plant for combined production of oil and an inert material acting as a carbon sink, preferably biochar, from waste oily produced water, preferably originating from the oil, gas or geothermal industry, according to claim 11.

In the oil, gas and geothermal industry, considerable quantities of water contaminated with oil residues and potentially containing certain proportions of salt, so called "waste oily produced water" are generated as a byproduct during the extraction of oil and gas or as a medium for heat extraction, which "produced water" is also referred to as process water or industrial wastewater. Oil wells may produce large volumes of water with the oil, while gas wells tend to produce water in smaller proportions. As an oilfield is exploited over longer period, its natural drive to produce hydrocarbons decreases leading to a decline in the production. To achieve maximum oil recovery, waterflooding is often implemented, in which water is injected into the reservoirs to help force the oil to the production wells. The injected water eventually reaches the production wells with the consequence that the produced water proportion of the total production increases.

The safe and environmentally friendly disposal of this produced water poses a fundamental challenge, especially in countries located in arid climatic zones, where the contamination of scarce drinking water resources is to be prevented by all means.

Globally, approximately 25 billion m³ of produced water are generated per year (as of 2020) from oil and gas fields with approximately 40% of this discharged to the environment. This water is contaminated with a remaining part of petroleum oils. Moreover, the produced water may have a varying degree of salt content ranging from low to brackish and hypersaline in nature. Commonly practiced methods of disposal into deeper water-bearing strata and the injection into aquifers no longer satisfy the continuously stricter requirements of environmental regulations. In addition, these measures are costly due to the high energy consumption, making them very inefficient from an economical viewpoint and goes against the industry's overall decarbonization objectives.

A treatment facility and method of the related art is known from EP 3 981 744 A1. Such a treatment facility is in successful use in the Sultanate of Oman and uses several constructed wetland basins with aquatic plants being tolerant to various salinity levels. For reducing the oil content in the water by the action of plants, the produced water to be treated is introduced and flows through the constructed wetland basins.

WO 2009/00845 A1 discloses a facility and a respective method for the treatment of contaminated water, i.e. produced water, from an oil well facility to produce biofuel and/or other biochemical compositions. The method comprises: a) separating a well effluent stream in an oil-water separator assembly into a crude oil stream and a contaminated water stream with capped fractions of contaminants, such as crude oil, salt and metals; b) feeding at least a fraction of the contaminated water stream to an irrigation system of a cascaded series of soil beds in which at least one saline tolerant cellulosic crop, such as reed, eucalyptus trees and/or tamaris, is planted, which cascade of soil beds acts as a cascaded biological filter for stepwise further reduction of the crude oil and metals content of the contaminated water stream; c) growing the cellulosic crop or crops on the soil beds, wherein the contaminated water stream is used to irrigate and mature the cellulosic crop or crops; d) harvesting a mature cellulosic crop from at least one of the soil beds; and e) converting cellulosic material in the harvested mature crop into a compound of a biofuel and/or other biochemical composition by a chemical conversion process.

The invention is based on the **objective** to provide a method and a production plant for producing sustainable oil having - based on a life cycle assessment - a low or close to zero carbon intensity and suitable as a precursor to produce low carbon intensity fuel.

The invention solves this objective by a method having the features in accordance with claim 1 and by a production plant having the features in accordance with claim 11. The invention also provides oil and an inert material acting as a carbon sink, preferably biochar, according to claim 15 that are jointly produced from a feedstock of waste oily produced water, preferably from the oil, gas or geothermal industry, according to the invention. Advantageous embodiments of the invention are stated in the dependent claims.

According to the invention, the method of combined production of oil and an inert material acting as a carbon sink, preferably biochar, from a feedstock of waste oily produced water, preferably from the oil, gas or geothermal industry, comprises the following steps:
- a) physical (preferably gravity-based or coalescence based or a combination thereof) separation and recovery of a first fraction of oil from the waste oily produced water;
- b) optionally polishing the waste oily produced water effluent of step a) by a biological treatment in a constructed wetland system, mangrove wetland or periphyton bioreactor to absorb and/or degrade a fraction of remaining oil;
- c) cultivating biomass using the treated water effluent of step a) and/or step b) - if provided and if desired - to capture CO₂ from the atmosphere; and
- d) harvesting the cultivated biomass of step c) and/or, optionally, surplus biomass generated in step b) and converting it into the inert material, preferably the biochar, preferably for long term storage of the CO₂ sequestered in the biomass, as a carbon sink. Other methodologies for creating a carbon sink starting from harvested biomass that may be developed in the future can be used within this patent, too.

According to the invention, the production plant for combined production of oil and an inert material acting as a carbon sink, preferably biochar, from a feedstock of waste oily produced water, preferably from the oil, gas or geothermal industry, in particular according to a method according to the invention, comprises:
- a separation equipment for physical separation and recovery of a first fraction of oil from the waste oily produced water;
- optionally a constructed wetland system, mangrove wetland or periphyton bioreactor for polishing the waste oily produced water effluent from the separation equipment by a biological treatment and to absorb and/or degrade a second fraction of remaining oil;
- at least one tank or basin or a constructed wetland system or a conventional plantation for receiving the treated water effluent from the separation equipment and/or effluent from the constructed wetland system, mangrove wetland or periphyton bioreactor, for cultivating biomass using the treated water to capture the CO₂ from the atmosphere, and
- equipment for converting the cultivated biomass and, optionally, surplus biomass from the constructed wetland system, mangrove wetland or periphyton bioreactor into the inert material, preferably the biochar, as a carbon sink.

According to a fundamental aspect of the invention, waste oily produced water is used for simultaneously producing a significant first fraction of oil or crude oil - the terms oil or crude oil are synonymously used in this application - and biomass that will be converted into an inert material, for example and preferably biochar, that can serve as a carbon sink. The biochar as an example of the inert material in particular can be used for approved methodologies to create a potentially long-term storage of the CO₂ captured in the biomass as a certified carbon sink. A life cycle assessment of the oil (i.e. the first fraction) generated from the feedstock of waste oily produced water using this method shall prove that the carbon intensity is low or equal to zero. As a waste product the use of the waste oily produced water from the oil, gas or geothermal industry for producing crude oil is not considered as a carbon or CO₂-generating process. Any carbon or CO₂ exhausted from burning fuel made from such crude oil can be compensated by the amount of carbon permanently stored in the inert material/biochar that is simultaneously produced from the waste product. As a result, fuel with a carbon intensity that is very low or nearly equal to zero can be produced. In other terms, the amount of carbon sequestered in the inert material/biochar produced from a unit of the feedstock of waste oily produced water is equal or substantially equal to or is possibly even higher than the amount of carbon in the oil recovered per unit of the feedstock of waste oily produced water.

When plant biomass is burned or decomposed, the assimilated carbon is re-released as CO₂. However, if the plant biomass is converted into biochar by being pyrolyzed, only about half or less of the plant carbon becomes volatile and escapes as combustible gas. The remaining fraction is transformed into a very persistent, stable and solid form of carbon (biochar) that degrades extremely slowly under natural conditions. In particular, the harvested biomass is converted in an oxygen-limited environment into biochar. There are several varieties of pyrolysis available, e.g. hydrothermal pyrolysis or vapor pyrolysis. The choice is made e. g. in accordance with the water content of the biomass.

Provided that the biochar (or any other inert material that may serve as a carbon sink) is not burned, a comparably large portion of its carbon remains in the terrestrial system for several centuries and thus represents a terrestrial carbon sink (C-sink). If biochar is, for example, used in construction materials as a sand substitute or as an additive in concrete, asphalt and plastics, it can also be assumed that the biochar persists and remains a C-sink for as long as the material itself persists.

Biochar is the lightweight black residue, made of carbon and ashes, remaining after the pyrolysis of biomass, and is a form of charcoal. Biochar is defined by the International Biochar Initiative as "the solid material obtained from the thermochemical conversion of biomass in an oxygen-limited environment".

In the context of this disclosure we define biochar broadly as a carbon-rich solid produced from plants and other biologic matter by pyrolysis according the common definitions in the industry. For the purposes of disclosure and the function within the context of the invention the term "biochar" as used herein is to be understood in the broader meaning as "inert material that can act as a carbon sink" but is a preferred example.

In particular, the hydrolysis process is a thermochemical conversion process. During pyrolysis, the biomass splits into a volatile component 'pyrolysis gas' (approximately 80% by volume) and a fixed carbon framework containing inert minerals (approximately 20%) - the 'char'. When char from any of these processes is considered for use as a soil improver or additive that is not burned, modern terminology defines it as 'biochar'.

The refractory stability of biochar leads to the concept of pyrogenic carbon capture and storage (PyCCS), i.e. carbon sequestration in the form of biochar as a means to mitigate climate change due to its potential of sequestering carbon. There exist various approaches for utilizing biochar, including but not limited to soil amendment, slash- and-char, water retention, stock fodder, and concrete, asphalt or plastics additive.

For the purposes of this invention, it is thus preferred to include a step of using the biochar as a long-term carbon sink in manners that are certified as a long-term carbon sink according to relevant carbon sequestration methodology, in particular for soil amendment, as a concrete additive and/or as asphalt or additive to avoid a re-release as CO₂.

In general, any suitable process can be used for the physical separation and recovery of an economically significant (first) fraction of oil from the waste oily produced water. The physical separation and recovery of the first fraction of oil from the waste oily produced water may include gravity-based separation - including flotation and centrifugation, coalescence-based separation, or a combination of the two.

A preferred gravity-based process includes introducing the waste oily produced water into at least one calming tank or basin where the oil due to its lower specific gravity than that of water forms a layer of oil rising to the top over time. This layer then can be skimmed off from the surface of the water in a manner known as such. In the process most of the suspended solids will settle to the bottom of the tank or basin as a sediment layer so that the wastewater with a significantly reduced oil content will be the middle layer between the oil on top and the solids on the bottom.

The feedstock of waste oily produced water in this passive (except for the introduction into the tank/basin that is normally done by pumps and except for the skimming step) gravity-based (physical) process is thus processed through a low-energy consuming physical or mechanical oil recovery facility that may recover substantially all the freefloating oil left in the feedstock with a low carbon footprint. While the amount of the oil thus recovered is monitored and measured, the recovered oil may be transferred back into the main oil and gas processing facility to eventually produce fuel like aviation fuel.

In an alternative process that can be used for the physical separation and recovery of the significant first fraction of oil, the feedstock of waste oily produced water can be introduced into at least one flotation tank or basin where gas (natural gas, nitrogen, air) bubbles are injected into the water. The bubbles may also be generated by an impeller, eductors or a sparger. The small bubbles adhere to the suspended matter causing the suspended matter to float to the surface of the water where it may then be removed by a skimming device. This process is commonly known as induced gas flotation.

Finally, as a still further potentially applicable process, the oil and water of the feedstock of waste oily produced water may be separated by centrifugation. In a typical centrifugal oil-water separator the denser liquid, usually water, accumulates at a periphery of a rotating container and is collected from the side of the device, whereas the less dense liquid, usually the oil, accumulates at the rotation axis and is collected from the center.

The processes can be run using oil separators with or without using the coalescence effect.

The processes described above may be combined and sequentially performed in order to increase the yield of recovered oil depending on a particular composition of the feedstock of waste oily produced water to be processed at a particular site.

The optional polishing of the waste oily produced water effluent of the physical separation and recovery step by a biological treatment in a constructed wetland system (for example a reedbed-plant), mangrove wetland or periphyton bioreactor may be applied if required by local regulation depending on the oil content to absorb and/or degrade a fraction of remaining oil. The produced water thus undergoes a secondary treatment which ensures that the effluent water meets prevailing discharge standards for environmental safety, while being suitable to be used in the subsequent step of cultivating additional biomass.

In the step of cultivating (additional) biomass the treated water effluent of step a) (i.e. the remaining water after the physical separation and recovery of the first fraction of oil) and/or step b) (i.e. treated produced "clean" water from the constructed wetland system, mangrove wetland or periphyton bioreactor) is used to capture the CO₂ from the atmosphere into the biomass. This measure is particularly advantageous if applied in arid and degraded desert areas where water and natural vegetation are scarce. Various native plant species may be cultivated in the arid and degraded desert areas on the basis of the treated produced water promoting habitat generation and biodiversity. Thus, fresh "natural" drinking water can be saved and a more constant and reliable supply of water for the biomass can be achieved. Furthermore, the step of cultivating additional biomass will be implemented in degraded areas that are not considered high carbon stock lands. In the step of harvesting the biomass and converting it into biochar the (additional) biomass as well as surplus biomass of the optional secondary polishing treatment may be included. According to the invention it is also possible to only use the biomass of the optional secondary polishing treatment for converting it into biochar.

The cultivation of the biomass in plantation fields or tanks or basins or a constructed wetland system of the production plant of the invention provides the advantage that the cultivation and harvesting can be at least partly automated and mechanized as the artificial structures - as compared to a natural pond - have defined dimensions and boundaries. Further, the feedstock of the process and intermediate products can be retained and controlled in confined boundaries, thus avoiding the risk of spillage into natural environments and percolation.

According to a preferred embodiment of the invention, the biomass that is preferably cultivated in at least one plantation field according to conventional agricultural concepts or one tank or basin or in a constructed wetland system preferably includes one or more of the following: trees, shrubs, plants, in particular wetland plants like water fern, mangroves, algae, fungi, periphyton, microorganisms, for example cyanobacteria, insects, animals. If useful, fertilizers, nutrition or any other suitable additive can be added to the waste oily produced water which enhances and/or supports the growing of the biomass. If the salinity of the water greater than 40 000 TDS, which is too high for growing higher plants, specially adapted wetlands to grow periphyton can be installed, where the periphyton helps to adsorb and degrade remains of oil and where the periphyton biomass can be harvested to produce biochar. Alternatively, the salinity of the produced water could be reduced to a level suitable for higher plants by including other water streams with lower salinity into the process.

Floating treatment wetlands are known and described as a suitable means for bioremediation of oil, diesel, or oil degradation by-products. The use of floating treatment wetlands for the recovery of oil, hydrocarbons, or related contaminants has been implemented with success and plants have proven to be effective. Plants may be able to provide surface area to stimulate native microorganisms and release enzymes to degrade contaminants. Other plant support structures are hydroponic root mat(s) or artificial island(s) and all of such structures are intended to be comprised within the term "constructed wetland systems". Overall, there is growing interest in biological recovery of oil due to its cost-effectiveness and less invasive approach.

For converting the biomass to biochar, any known suitable process can be used. According to invention it is preferred that the harvested biomass is converted to biochar via pyrolysis and the equipment for converting the biomass to biochar preferably comprises a pyrolysis plant, preferably a gasifier or a flame-curtain pyrolysis system, for subjecting the biomass to the pyrolysis

The gasification process typically consists of four main stages: oxidation of fuel to provide the necessary temperature, drying, pyrolysis, and reduction. The temperature during drying is 0-250 °C, the temperature during pyrolysis in gasifiers is 250-550 °C (523-823 K), 600-800 °C (873-1,073 K) in the reduction zone and 800-1,000 °C (1,070-1,270 K) in the combustion zone. Pyrolysis is the direct thermal decomposition of biomass in the absence of oxygen (preventing combustion), which produces a mixture of solids (the biochar proper), liquid (bio-oil), and gas (syngas) products.

Even though biochar production usually produces an energy surplus, since the pyrolysis gases are burned and used for energy generation, external energy is usually required to operate pyrolysis plants.

The method of the invention preferably comprises the step of drying the biomass after harvesting. Storage of moist non-woody biomasses such as straw, crop residues, pomace, etc., but also wood waste with high content of green plant material may create methane emissions during uncontrolled composting. The drying of the biomass can be advantageously and without supply of external energy performed in arid climatic zones, thus reducing or avoiding greenhouse gas emissions without deteriorating the carbon footprint of the process.

According to the method of the invention the amount of carbon sequestered in the biochar produced from a unit of the feedstock of waste oily produced water is at least equal or substantially equal to or may be even higher than the amount of carbon in the oil recovered per unit of the feedstock of waste oily produced water. The life cycle assessment of the recovered oil proves that the carbon emissions generated from the use of recovered oil produced by the method of the invention in aviation fuel (as an example) may be offset against the long-term sequestered carbon within the biochar. This carbon offset provides the possibility of producing - from the recovered oil - a SAF (Sustainable Aviation Fuel) or LCAF (Low Carbon Aviation Fuel) compliant fuel (for example eligible under the International Civil Aviation Organization (ICAO) Carbon Offsetting and Reduction Scheme for International Aviation (CORSIA)) and provide the base for creating SAF/LCAF Emission Offset Certificates. As aviation accounts for approximately 2 to 3% of global CO₂ emissions, and as air travel is expected to double in the next 15 years, these numbers will grow rapidly. The International Air Transport Association (IATA) has taken steps to achieving carbon neutral growth from 2020 onwards and net-zero carbon emissions from the global air transport industry operations by 2050. While many solutions, such as electrified aviation, are still in early stages of development, the industry needs feasible solutions to swiftly reduce greenhouse gas emissions of flying by replacing fossil jet fuel.

Likewise, the oil and the carbon offset of the inert material/biochar both produced by the process of the invention provides the possibility to produce low carbon intensity fuel from such precursor according to the LCFS (Low Carbon Fuel Standard) identified by the California Air Resource Board as one of several discrete early action measures to reduce California's greenhouse gas (GHG) emissions that cause climate change, or any according to other similar standards that may be developed in the future in other countries or other organisations.

In order to provide the basis for assessing the relevant impact of the carbon reductions achieved by the method of the invention, the amount of oil recovered from the waste oily produced water and the amount of inert material/biochar produced from processing the waste oily produced water with the method and used as a long-term carbon sink are measured with suitable means, i.e. flow meters or scales, and registered with suitable organizations.

The invention also relates to oil and biochar produced from a feedstock of waste oily produced water, preferably from the oil, gas or geothermal industry, as a direct result of the method according to the invention as described above.

Examples for carrying out the invention will be described below by reference to the attached drawing, in which:
Fig. 1 shows an example of a first system concept for carrying out the invention;
Fig. 2 shows an example of a second system concept for carrying out the invention;
Fig. 3 shows an example of a third system concept for carrying out the invention.

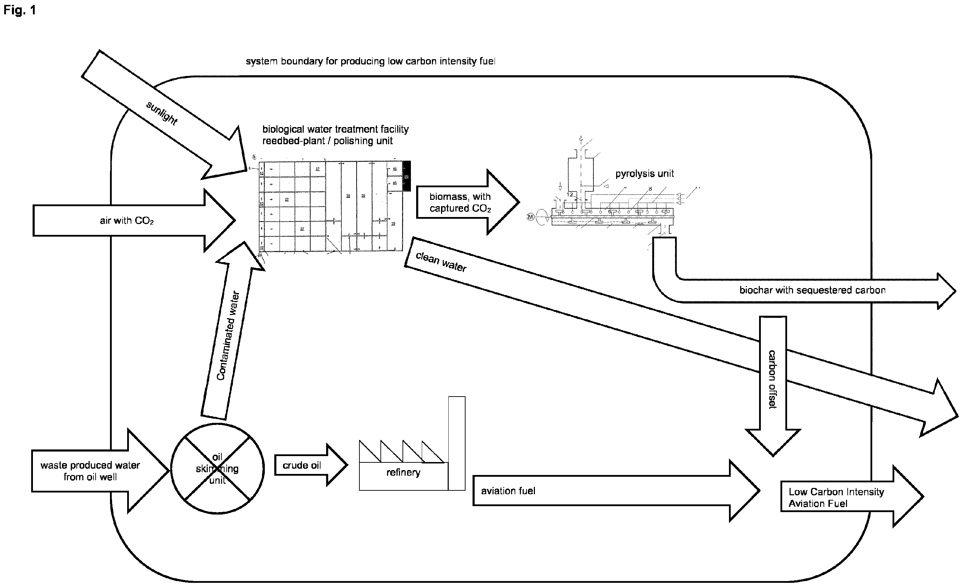

The first exemplary system concept shown in Fig. 1 embodies a variant of a production plant for producing oil/crude oil and biochar from a feedstock of waste oily produced water, in this example an oil well. The waste produced water is introduced into a separation equipment (in this example an oil skimming unit) for physical separation and recovery of a first significant fraction of oil/crude oil from the waste oily produced water. The crude oil retrieved from the oil skimming unit is transferred to a refinery where it may be processed to produce fuel (in this example aviation fuel) using technology that is known as such.

The waste oily produced water (contaminated water with significantly reduced content of oil) effluent from the oil skimming unit is transferred to a biological water treatment facility to produce biomass using sunlight and CO₂ from atmospheric air and to absorb and/or degrade a further fraction of remaining oil. Such a biological water treatment facility may be a constructed wetland system like a reedbed plant as shown in the example, mangrove wetland or periphyton bioreactor for "polishing" the contaminated water. As is known, reedbeds are natural habitats found in floodplains, waterlogged depressions and estuaries and are part of a succession from young reeds colonising open water or wet ground through a gradation of increasingly dry ground. Aging reedbeds build up a considerable litter layer that eventually rises above the water level and that ultimately provides opportunities for growing larger terrestrial plants such as shrubs and trees. Artificial reedbeds are used to remove pollutants from greywater, and are also called "constructed wetlands". Other examples of suitable biological water treatment facilities are mangrove wetlands or periphyton bioreactors.

In the first exemplary system it is assumed that the water effluent from the biological water treatment facility is sufficiently clean to be used according to respective local regulations, for example, for irrigation purposes in a conventional plantation or to be released to the environment.

The biomass from the biological water treatment facility with the captured CO₂ is transferred to equipment for converting the biomass from the biological water treatment facilities (i.e. a constructed wetland system like a reedbed plant, a mangrove wetland or a periphyton bioreactor) into biochar holding the sequestered carbon. In this example the equipment is embodied as a pyrolysis unit. The biochar thus produced may be taken out and used as a long-term carbon sink in manners that are certified as a long-term carbon sink according to relevant carbon sequestration methodology, in particular for soil amendment, as a concrete additive and/or as asphalt or additive to avoid a premature re-release of the sequestered CO₂.

The carbon offset attributed to the biochar produced in the process provides the possibility of producing - from the recovered crude oil transferred to the refinery - a SAF (Sustainable Aviation Fuel) or a LCAF (Low Carbon Intensity Aviation Fuel) or a LCFS (Low Carbon Fuel Standard) compliant fuel naming just several examples of common standards. The Fig. 1 shows a system boundary for producing eligible low carbon intensity fuel according to such concepts from the waste produced water introduced into system. To implement such a concept, the invention provides the steps of measuring and registering the amount of oil recovered from the waste oily produced water in the oil skimming unit (as an example of the physical oil separation) and the amount of biochar produced from biomass cultivated with cleaned water from processing the waste oily produced water with the method, which biochar is used as a long-term carbon sink.

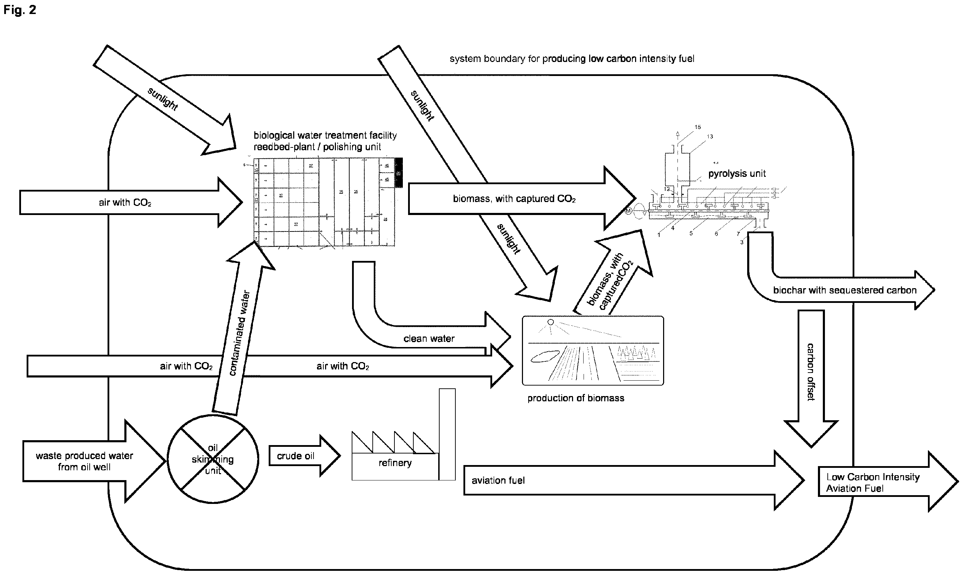

The second exemplary system concept shown in Fig. 2 embodies a further variant of a production plant for producing oil/crude oil and biochar from a feedstock of waste oily produced water that includes all the components of Fig. 1 but adds a further step or facility for the production of (additional) biomass from the clean water effluent from the biological water treatment facility (that is extracted from the system in the concept of Fig. 1). In this additional step the clean water as well as sunlight and CO₂ captured from atmospheric air is used to cultivate the additional biomass. A tank or basin or a constructed wetland system or conventional plantation fields may be used in conjunction with trees, shrubs, plants, in particular wetland plants, algae, fungi, periphyton, insects, animals that are suitable to be grown under the environmental conditions of a respective site.

The additional biomass cultivated in this step is harvested and is transferred - together with the biomass from the biological water treatment facility - with the captured CO₂ to the equipment for converting the biomass from the biological water treatment facility into biochar holding the sequestered carbon (i.e. the pyrolysis unit in this example).

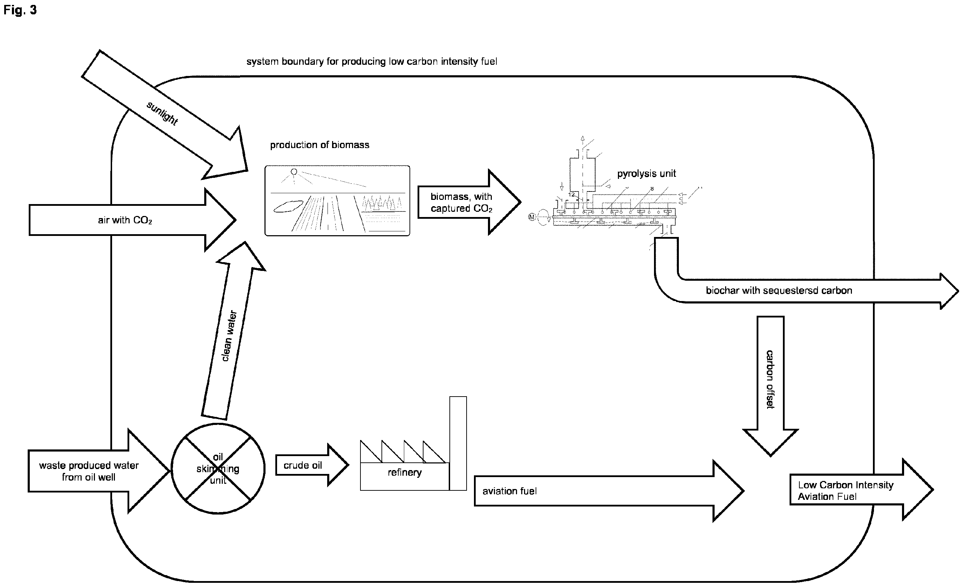

The third exemplary system concept shown in Fig. 3 embodies a further variant of a production plant for producing oil/crude oil and biochar from a feedstock of waste oily produced water that includes most of the components of Fig. 2 but omits the step or facility for the biological water treatment (under the assumption that the water effluent from the oil skimming unit is sufficiently clean to be directly transferred and used in the step or facility for the production of (additional) biomass as described in connection with Fig. 2 without the optional polishing step). The harvesting of the cultivated biomass and the production of the biochar as well as the potential use of the carbon offset are as described in connection with Figs. 1 and 2.

Although not shown on the system diagrams of Figs. 1 to 3 the process may comprise an additional step of drying the biomass after harvesting and before processing it in the pyrolysis unit.

Depending on the amount of surplus biomass of the biological water treatment facility and/or the biomass cultivated using the clean water and processed in the pyrolysis unit to produce biochar, the amount of carbon sequestered in the biochar produced from a unit of the feedstock of waste oily produced water may be equal or substantially equal to or may even be higher than the amount of carbon in the crude oil recovered per unit of the feedstock of waste oily produced water.

While three examples of concepts are described in connection with Figs. 1 to 3 it goes without saying that further combinations are comprised within the scope defined by the attached claims.

## Claims

1. Method of combined production of oil and an inert material acting as a carbon sink, preferably biochar, from a feedstock of waste oily produced water, preferably from the oil, gas or geothermal industry, comprising the following steps:
- a) physical separation and recovery of a first fraction of oil from the waste oily produced water;
- b) optionally polishing the waste oily produced water effluent of step a) by a biological treatment in a constructed wetland system, mangrove wetland or periphyton bioreactor to absorb and/or degrade a fraction of remaining oil;
- c) cultivating biomass using the treated water effluent of step a) and/or step b) to capture CO₂ from the atmosphere; and
- d) harvesting the cultivated biomass of step c) and/or, optionally, biomass generated in step b) and converting it into the inert material acting as a carbon sink, preferably the biochar.

2. Method according to claim 1,
**characterized in that**
the physical separation and recovery of the first fraction of oil from the waste oily produced water includes gravity based separation, coalescence based separation or a combination of the two.

3. Method according to claim 1 or 2,
**characterized in that**
the physical separation and recovery of the first fraction of oil from the waste oily produced water includes one or more of the following:
- introducing the waste oily produced water into at least one calming tank or basin to form a layer of oil rising to the top and skimming off the layer of oil from the surface of the water;
- introducing the waste oily produced water into at least one flotation tank or basin, injecting gas bubbles into the water and skimming off of the oil floated to the surface of the water, and
- separating the oil and water of the waste oily produced water by centrifugation.

4. Method according to claim 1, 2 or3,
**characterized in that**
the biomass is cultivated in at least one tank or basin or in a constructed wetland system or in a conventional plantation field.

5. Method according to any one of claims 1 to 4,
**characterized in that**
the cultivated biomass includes one or more of the following: trees, shrubs, plants, in particular wetland plants, algae, fungi, periphyton, microorganisms, enzymes, insects, animals.

6. Method according to any one of the claims 1 to 5,
**characterized in that**
the harvested biomass is converted to biochar via pyrolysis, preferably hydrothermal pyrolysis or vapor pyrolysis.

7. Method according to any one of the claims 1 to 6,
**characterized in that**
it comprises the step of using the inert material, preferably the biochar, as a long-term carbon sink, in particular for soil amendment, as a concrete additive and/or as asphalt additive.

8. Method according to any one of the claims 1 to 7,
**characterized in that**
it comprises the step of drying the biomass after harvesting.

9. Method according to any one of the claims 1 to 8,
**characterized in that**
the amount of carbon sequestered in the inert material acting as a carbon sink, preferably the biochar, produced from a unit of the feedstock of waste oily produced water is equal or substantially equal to or is higher than the amount of carbon in the oil recovered per unit of the feedstock of waste oily produced water.

10. Method according to any one of the claims 1 to 9,
**characterized in that**
the amount of oil recovered from the waste oily produced water and the amount of the inert material, preferably the biochar, produced from processing the waste oily produced water with the method and used as a long-term carbon sink are measured and registered.

11. Production plant for combined production of oil and an inert material acting as a carbon sink, preferably biochar, from a feedstock of waste oily produced water, preferably from the oil, gas or geothermal industry, in particular according to a method according to any one of the claims 1 to 10, comprising
- a separation equipment for physical separation and recovery of a first fraction of oil from the waste oily produced water;
- optionally a constructed wetland system, mangrove wetland or periphyton bioreactor for polishing the waste oily produced water effluent from the separation equipment by a biological treatment to absorb and/or degrade a fraction of remaining oil;
- at least one tank or basin or a constructed wetland system or a conventional plantation for receiving the treated water effluent from the separation equipment and/or effluent from the constructed wetland system, mangrove wetland or periphyton bioreactor, for cultivating biomass using the treated water to capture CO₂ from the atmosphere, and
- equipment for converting the cultivated biomass and, optionally, biomass from the constructed wetland system, mangrove wetland or periphyton bioreactor into the inert material acting as a carbon sink, preferably the biochar,.

12. Production plant according to claim 11,
**characterized in that**
the separation equipment for the physical separation and recovery of a first fraction of oil from the waste oily produced water includes one or more of the following:
- at least one calming tank or basin for receiving the waste oily produced water and skimming means arranged to skim off a layer of oil from the surface of water in the at least one calming tank or basin;
- at least one flotation tank or basin for receiving the waste oily produced water and means for injecting gas bubbles into the water and skimming off of the oil floated to the surface of the water, and
- a centrifugal separator for separating the oil and water of the waste oily produced water by centrifugation, and
- a coalescence-based separator.

13. Production plant according to claim 11 or 12,
**characterized in that**
the equipment for converting the biomass to biochar comprises a pyrolysis plant, preferably a gasifier or a flame-curtain pyrolysis system, for subjecting the biomass to pyrolysis.

14. Production plant according to anyone of the claims 11 to 13, comprising means for measuring the amount of oil recovered from the waste oily produced water and the amount of the inert material acting as a carbon sink, preferably the biochar, produced from processing the waste oily produced water.

15. Oil and inert material acting as a carbon sink, preferably biochar, produced from a feedstock of waste oily produced water, preferably from the oil, gas or geothermal industry, according to the method of any one of claims 1 to 10.

## Amended claims

### Amended claims in accordance with Rule 137(2) EPC.

1. Method of combined production of oil and an inert material acting as a carbon sink, preferably biochar, from a feedstock of waste oily produced water, preferably from the oil, gas or geothermal industry, comprising the following steps:
- a) physical separation and recovery of a first fraction of oil from the waste oily produced water;
- b) optionally polishing the waste oily produced water effluent of step a) by a biological treatment in a constructed wetland system, mangrove wetland or periphyton bioreactor to absorb and/or degrade a fraction of remaining oil;
- c) cultivating biomass using the treated water effluent of step a) and/or step b) to capture CO₂ from the atmosphere; and
- d) harvesting the cultivated biomass of step c) and/or, optionally, biomass generated in step b) and converting it into the inert material acting as a carbon sink,
wherein the harvested biomass is converted to biochar via pyrolysis, and
wherein the amount of carbon sequestered in the inert material acting as a carbon sink, namely the biochar, produced from a unit of the feedstock of waste oily produced water is equal or substantially equal to or is higher than the amount of carbon in the oil recovered per unit of the feedstock of waste oily produced water.

2. Method according to claim 1,
**characterized in that**
the physical separation and recovery of the first fraction of oil from the waste oily produced water includes gravity based separation, coalescence based separation or a combination of the two.

3. Method according to claim 1 or 2,
**characterized in that**
the physical separation and recovery of the first fraction of oil from the waste oily produced water includes one or more of the following:
- introducing the waste oily produced water into at least one calming tank or basin to form a layer of oil rising to the top and skimming off the layer of oil from the surface of the water;
- introducing the waste oily produced water into at least one flotation tank or basin, injecting gas bubbles into the water and skimming off of the oil floated to the surface of the water, and
- separating the oil and water of the waste oily produced water by centrifugation.

4. Method according to claim 1, 2 or 3,
**characterized in that**
the biomass is cultivated in at least one tank or basin or in a constructed wetland system or in a conventional plantation field.

5. Method according to any one of claims 1 to 4,
**characterized in that**
the cultivated biomass includes one or more of the following: trees, shrubs, plants, in particular wetland plants, algae, fungi, periphyton, microorganisms, enzymes, insects, animals.

6. Method according to any one of the claims 1 to 5,
**characterized in that**
the harvested biomass is converted to biochar via hydrothermal pyrolysis or vapor pyrolysis.

7. Method according to any one of the claims 1 to 6,
**characterized in that**
it comprises the step of using the inert material, preferably the biochar, as a long-term carbon sink, in particular for soil amendment, as a concrete additive and/or as asphalt additive.

8. Method according to any one of the claims 1 to 7,
**characterized in that**
it comprises the step of drying the biomass after harvesting.

9. Method according to any one of the claims 1 to 8,
**characterized in that**
it comprises the step of producing, from the recovered oil, a low carbon intensity fuel.

10. Method according to any one of the claims 1 to 9,
**characterized in that**
the amount of oil recovered from the waste oily produced water and the amount of the inert material, preferably the biochar, produced from processing the waste oily produced water with the method and used as a long-term carbon sink are measured and registered.

11. Production plant for combined production of oil and an inert material acting as a carbon sink, preferably biochar, from a feedstock of waste oily produced water, preferably from the oil, gas or geothermal industry, according to a method according to any one of the claims 1 to 10, comprising
- a separation equipment for physical separation and recovery of a first fraction of oil from the waste oily produced water;
- optionally a constructed wetland system, mangrove wetland or periphyton bioreactor for polishing the waste oily produced water effluent from the separation equipment by a biological treatment to absorb and/or degrade a fraction of remaining oil;
- at least one tank or basin or a constructed wetland system or a conventional plantation for receiving the treated water effluent from the separation equipment and/or effluent from the constructed wetland system, mangrove wetland or periphyton bioreactor, for cultivating biomass using the treated water to capture CO₂ from the atmosphere,
- equipment for converting the cultivated biomass and, optionally, biomass from the constructed wetland system, mangrove wetland or periphyton bioreactor into the inert material acting as a carbon sink, wherein the equipment for converting the biomass to biochar comprises a pyrolysis plant, preferably a gasifier or a flame-curtain pyrolysis system, for subjecting the biomass to pyrolysis, and
means for measuring the amount of oil recovered from the waste oily produced water and the amount of the inert material acting as a carbon sink, namely the biochar, produced from processing the waste oily produced water.

12. Production plant according to claim 11,
**characterized in that**
the separation equipment for the physical separation and recovery of a first fraction of oil from the waste oily produced water includes one or more of the following:
- at least one calming tank or basin for receiving the waste oily produced water and skimming means arranged to skim off a layer of oil from the surface of water in the at least one calming tank or basin;
- at least one flotation tank or basin for receiving the waste oily produced water and means for injecting gas bubbles into the water and skimming off of the oil floated to the surface of the water, and
- a centrifugal separator for separating the oil and water of the waste oily produced water by centrifugation, and
- a coalescence-based separator.
